(19) Europäisches Patentamt
European Patent Office
Office européen des brevets

(11) **EP 4 775 031 A1**

(12) **EUROPEAN PATENT APPLICATION**
published in accordance with Art. 153(4) EPC

(43) Date of publication:
**15.07.2026  Bulletin 2026/29**

(51) International Patent Classification (IPC):
**A01M 7/00** *(2006.01)*    **B05B 12/00** *(2018.01)*

(21) Application number: **24861677.3**

(22) Date of filing: **12.07.2024**

(86) International application number:
**PCT/CN2024/105237**

(87) International publication number:
**WO 2025/050832 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.09.2023  CN 202311152140**

(71) Applicant: **FJ Dynamics Technology Academy (Chang Zhou) Co., Ltd.**
**Changzhou, Jiangsu 213001 (CN)**

(72) Inventors:
• **WANG, Bo**
  **Xiangyang, Hubei 441100 (CN)**

• **LIU, Mingming**
  **hangzhou, Jiangsu 213001 (CN)**
• **XIE, Sen**
  **hangzhou, Jiangsu 213001 (CN)**
• **ZHANG, Xiao**
  **Xiangyang, Hubei 441100 (CN)**
• **LI, Yongjin**
  **hangzhou, Jiangsu 213001 (CN)**
• **QIN, Shuo**
  **hangzhou, Jiangsu 213001 (CN)**
• **WU, Di**
  **Shenzhen, Guangdong 518000 (CN)**

(74) Representative: **Metida**
**Gyneju str. 16**
**01109 Vilnius (LT)**

(54) **SPRAYING CONTROL SYSTEM AND SPRAYING AGRICULTURAL MACHINE**

(57)    The present application provides a spraying control system (200) and a spraying agricultural machine (100), the spraying control system (200) is applied in the spraying agricultural machine (100). The spraying agricultural machine (100) comprises a water tank (22) and a spraying bar frame (24) communicated with the water tank (22). The spraying bar frame (24) defines a plurality of sprinkler (25). The spraying control system (200) comprises an automatic driving unit (40), a path planning unit (50), and a spraying controlling unit (60). The an automatic driving unit (40) is configured to detect automatic driving information of the spraying agricultural machine (100). The path planning unit (50) is configured to generate operation regions based on the automatic driving information. The spraying controlling unit (60) is configured to control at least some of the sprinkler (25) on the spraying bar frame (24) to spray solution in a predefined spraying amount on a target object, based on the operation region and the automatic information. The application considers factors affected the spraying amount, which are the operation region and the automatic driving information, for making the spraying control system (200) to control the spraying amount of the sprinkler (25) more accurately.

FIG. 4

**Description**

CROSS-REFERENCE TO RELATED APPLICATION

This application claims priority to a Chinese patent application filed with the China Patent Office on September 06, 2023, with application number 202311152140.6, the entire contents of which are incorporated by reference in this application.

TECHNICAL FIELD

The subject matter herein generally relates to agricultural machine technical field, in particular to a spraying control system and a spraying agricultural machine.

BACKGROUND

In current, no matter on a straight path or a cured path, a spraying control system in a plant protection machine controls each sprinkler to work under a fixed spraying speed for executing a spraying operation on crops or weeds. The spraying speed of each sprinkler is unable to change according to the real-time speed of the plant machine. Thus, due to a spraying amount of each sprinkler remains unchanged, an application rate of each parcel of operation field is uneven. A spraying uniformity of the plant protection machine is hard to be effective controlled, the more or less application rate is not conductive to an increase production of the crops, and the cost is high. Secondly, the height of the spray bar frame of the plant protection machine needs to be adjusted manually, and the spraying height is hard to be consistent. Due to an effect of wind, the spraying height will affect an arc shape of the solution sprayed by the sprinkler, therefore the application rate of each parcel of operation field is affected. Finally, while the plant protection machine turns or turns around, an electro-hydraulic elevator of the plant protection machine is manually controlled to lift up a spraying apparatus, a labor intensity is high. Meanwhile, an accident is easily occurred to damage the spray bar frame of the plant protection machine. Thus, a degree of automaticity of the plant protection machine is low, and it is hard to ensure the spray quality of the spraying operation.

SUMMARY OF THE APPLICATION

As described above, the present application provides a spraying control system and spraying agricultural machine, for controlling a spraying amount of each sprinkler of the sparing agricultural machine, therefore the spraying amount of the sprinkler may be accurately controller.

In a first aspect of the present application provides a spraying control system, applied in a spraying agricultural machine, the spraying agricultural machine includes a water tank and a spray bar frame communicated with the water tank, the spray bar frame includes a plurality of sprinklers. The spraying control system includes an automatic driving unit, a path planning unit, and a spray controlling unit. The automatic driving unit is configured to detect automatic driving information of the spraying agricultural machine, the path planning unit is configured to generate an operation region based on the automatic driving information. The spray controlling unit is configured to control at least some of the sprinklers on the spray bar frame to spray solution with a predefined spraying amount on a target object, based on the operation region and the automatic driving information.

Thus, the spray controlling unit controls the sprinklers to spray the solution with the predefined spraying amount on the target object based on the operation region generated by the automatic driving unit and the automatic driving information detected by the automatic driving unit, and considers factors affected with the spraying amount, which are the operation region and the automatic driving information, therefore the controlling system may accurately control the spraying amount of the sprinkler.

In some embodiments of the first aspect, the automatic driving information includes position information of the spraying agricultural machine, the automatic driving unit includes an automatic driving controller and a location antenna, the automatic driving controller is configured to determine regions besides the operation boundary as a stopping spraying regions and regions inside the operation boundary as a non-stopping spraying region, based on the operation boundary of the operation region, or the automatic driving controller is configured to determine regions besides operation paths as the stopping spraying regions and regions inside the operation paths as the non-stopping spraying region, based on the operation paths in the operation boundary, the location antenna is configured to detect the position information of the spraying agricultural machine; the spraying controlling unit further includes a spraying controller, the spraying controller is configured to obtain a sprinkler position of each sprinkler based on the position information and the position of the sprinkler on the spray bar frame; control the sprinkler to stop spraying, it is determined that the sprinkler position is located in the stopping spraying region; and is configured to control the sprinkler to spray the solution with the predefined spraying amount, it is determined that the sprinkler position is located in the non-stopping spraying region.

In some embodiments of the first aspect, the automatic driving controller is also configured to determine travelled operation paths, which the spraying agricultural machine has travelled, and non-travelled operation paths, which the spraying agricultural machine has not travelled, in the non-stopping spraying region; determine a spraying overlapping region based on the operation paths, which the spraying agricultural machine has travelled, and the operation paths, which the spraying agricultural machine has not travelled; the spraying controller is also configured to control the sprinkler to stop spraying after a predefined time duration, it is determined that the corresponding sprinkler is located in the spraying overlapping region.

In some embodiments of the first aspect, the predefined spraying amount includes a line spraying amount, the automatic driving information also includes a rotation angle and an real-time speed of the spraying agricultural machine, the automatic driving unit further includes an angle sensor, the angle sensor is configured to detect the rotation angle of the spraying agricultural machine; the automatic driving controller is also configured to obtain the real-time speed of the spraying agricultural machine based on the position information and a predefined algorithm. The spraying controller is further configured to obtain a first speed of any of the sprinklers based on the real-time speed and the sprinkler position, it is determined that the operation paths of the non-stopping spraying region is a line path based on the rotation angle, obtain the line spraying amount of the sprinkler based on the first speed and a predefined parameter, and control the sprinkler to spray the solution with the line spraying amount.

In some embodiments of the first aspect, the predefined spraying amount further includes a curved spraying amount; the spraying controller is further configured to determine a second speed corresponding to each sprinkler based on the real-time speed and the sprinkler position, it is determined that the operation path in the non-stopping spraying region is a curved path based on the rotation angle, obtain the curved spraying amount of each sprinkler based on the second speed and a predefined parameter, and control the sprinkler to spray the solution with the curved sparing amount.

In some embodiments of the first aspect, the predefined spraying amount further includes a fixed point spraying amount, the spraying control unit further includes a visual module, the visual module is configured to identify the target objects in the non-stopping spraying region, and generate a labeled prescription map of the target object; the spraying controller is further configured to determine target sprinklers and non-target sprinklers based on the labeled prescription map, wherein the target sprinklers are the sprinkler corresponding to the target objects; obtain the fixed point spraying amount based on the labeled prescription map, control the target sprinklers to spray the solution with the fixed point spraying amount, and control the non-target sprinklers to stop spraying.

In some embodiments of the first aspect, the spraying controlling unit further includes a spraying ratio valve, a flowmeter, and a pressure sensor, the flowmeter is configured to detect a solution quantity in the spraying agricultural machine; the pressure sensor is configured to detect a liquid flow of the solution in the spraying agricultural machine; the spraying controller is further configured to detect a duty cycle based on the predefined spraying amount, the solution quantity, and the liquid pressure, control the spraying ratio valve to adjust the liquid pressure, for making the sprinkler to spray the solution with a predefined spraying amount.

In some embodiments of the first aspect, the spraying control system further includes a hydraulic pressure elevator unit, the hydraulic pressure elevator unit includes an ultrasonic ranging sensor, a hydraulic unit driver, a hydraulic ratio valve, and a hydraulic cylinder; the ultrasonic ranging sensor is configured to detect a real-time distance between the sprinkler and the target object; the hydraulic unit driver is configured to control the hydraulic ratio valve to adjust a supply volume of hydraulic oil in the hydraulic cylinder based on the real-time distance; the hydraulic cylinder adjusts a height of the spray bar frame based on the supply volume, for making the distance between the sprinkler and the target object at a predefined distance.

In some embodiments of the first aspect, the spraying control system also includes a display terminal and a central control unit; the automatic driving unit, the path planning unit, and the spraying controlling unit are configured to execute controlling instructions generated by the display terminal or the central control unit; wherein the display terminal is configured to generate the controlling instructions in response to an input of an operator; the central control unit is configured to generate the controlling instructions in response to information interaction with the automatic driving unit, the path planning unit, and the spraying controlling unit.

In a second aspect of the present application provides a spraying agricultural machine, the spraying agricultural machine includes a water tank, a spraying bar frame, a plurality of sprinklers disposed on the spraying bar frames, and the spraying control system as above recited.

BRIEF DESCRIPTION OF THE FIGURES

FIG. 1 is a spraying application scene view of a plant protection machine in a prior art.

FIG. 2 is a structure diagram view of a spraying agricultural machine according to an embodiment of the present application.

FIG. 3 is a structure diagram view of the spraying agricultural machine as shown in FIG. 2 according to another embodiment of the present application.

FIG. 4 is a structure diagram view of a spraying control system according to an embodiment of the present application.

FIG. 5 is an application scene view of a control terminal of the spraying control system as shown in FIG. 4.

FIG. 6 is an application scene view of the spraying control system as shown in FIG. 4.

FIG. 7 is a structure diagram view of an automatic driving unit of the spraying control system as shown in FIG. 4.

FIG. 8 is another application scene view of the spraying control system as shown in FIG. 4.

FIG. 9 is another application scene view of the spraying control system as shown in FIG. 4.

FIG. 10 is a structure diagram view of a spraying controlling unit of the spraying control system as shown in FIG. 4.

FIG. 11 is another application scene view of the spraying control system as shown in FIG. 4

FIG. 12 is another application scene view of the spraying control system as shown in FIG. 4 in another embodiment.

FIG. 13 is another application scene view of the spraying control system as shown in FIG. 4 in another embodiment.

FIG. 14A is another application scene view of the spraying control system as shown in FIG. 4 in another embodiment.

FIG. 14B is another application scene view of the spraying control system as shown in FIG. 4 in another embodiment.

FIG. 14C is another application scene view of the spraying control system as shown in FIG. 4 in another embodiment.

FIG. 15 is another application scene view of the spraying control system as shown in FIG. 4 in another embodiment.

FIG. 16 is a structure diagram view of a hydraulic pressure elevator unit of the spraying agricultural machine as shown in FIG. 4.

FIG. 17 is another structure diagram view of a spraying control system according to an embodiment of the present application.

Description of reference characters as below:

100, spraying agricultural machine; 10, driving mechanism; 20, operation mechanism; 21, connection component; 22, water tank; 23, spraying apparatus; 24, spraying bar frame; 25, sprinkler; 2501, sprinkler; 2502, sprinkler; 200, spraying control system; 30, central control unit; 40, automatic driving unit; 41, location antenna; 411, first antenna; 412, second antenna; 42, communication antenna; 43, steering wheel; 44, posture sensor; 45, camera module; 451, first camera; 452, wireless transmission module; 46, angle sensor; 47, automatic driving controller; 50, path planning unit; 60, spraying controlling unit; 61, spraying controller; 62, pile-up valve; 621, spraying ratio valve; 623, pressure sensor; 622, flowmeter; 63, visual module; 631, camera driver; 632, second camera; 633, fill light; 70, control terminal; 71, display unit; 80, hydraulic pressure elevator unit; 81, hydraulic unit driver; 82, ultrasonic ranging sensor; 83, hydraulic ratio valve; 84, hydraulic cylinder.

DETAILED DESCRIPTION

Terms "a plurality" used in this application means two or more. In addition, it should be understood that in the description of this application, terms, such as "first" and "second", are merely used for distinguishing and description, and cannot be understood as an indication or implication of relative importance or an indication or implication of an order.
In the embodiments of the disclosure, the expression "exemplary" or "for example" is used to indicate an example, exemplification or illustration. Any embodiment or design solution described as "exemplary" or "for example" in the embodiments of the disclosure should not be interpreted as being more preferred or advantageous than other embodiments or design solutions. To be precise, the use of the expression "exemplary" or "for example" is intended to present relevant concepts in a specific manner.

A brief description is made on the technical field related to the solution of the present disclosure below.

In current, no matter on a straight path or a cured path, a spraying control system in a plant protection machine controls each sprinkler to work under a fixed spraying speed for executing a spraying operation on fields or weeds. The spraying speed of each sprinkler is unable to change according to the real-time speed of the plant machine. Thus, due to a spraying amount of each sprinkler remains unchanged, an application rate of each parcel of operation field is uneven. For example, the speed of the plant protection machine increases, the spraying amount of the sprinkler remains unchanged, the application rate received by each parcel in a speed increasing period is less than the application rate received by each parcel in a normal speed period.

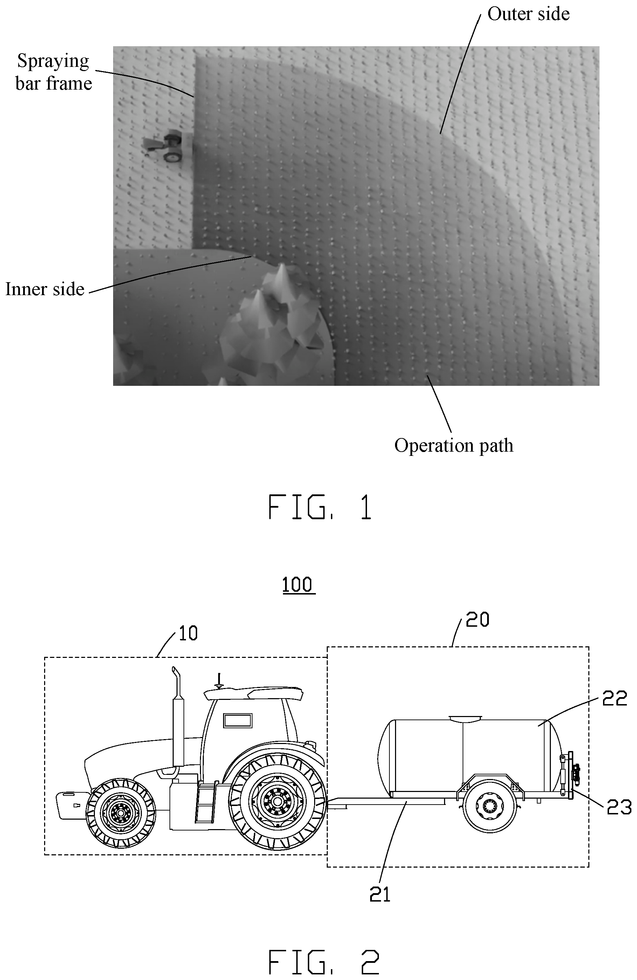

And referring to FIG. 1, while on the curved path, even the speed of the plant protection machine remains unchanged, due to the positions of the sprinkler on the spraying bar frame are different, the real-time speed of the sprinkler is different, it will cause the application rate received by each parcel located on the inner side and the outer side of the curved path are not even. The spraying uniformity of the plant protection machine is hard to be effectively controlled, the more or less application rate is not conductive to an increase production of the crops, and the cost is high. Secondly, the height of the spray bar frame of the plant protection machine needs to be adjusted manually, and the spraying height is hard to be consistent. Due to an effect of wind, the spraying height will affect an arc shape of the solution sprayed by the sprinkler, therefore the application rate of each parcel of operation field is affected. Finally, while the plant protection machine turns or turns around, an electro-hydraulic elevator of the plant protection machine is manually controlled to lift up a spraying apparatus, a labor intensity is high. Meanwhile, an accident is easily occurred to damage the spray bar frame of the plant protection machine. That is, the degree of automaticity of the plant protection machine is low, and it is hard to ensure the spray quality of the spraying operation.

As described above, the present application provides a spraying control system and spraying agricultural machine, for controlling a spraying amount of each sprinkler of the sparing agricultural machine, therefore the spraying amount of the sprinkler may be accurately controller.

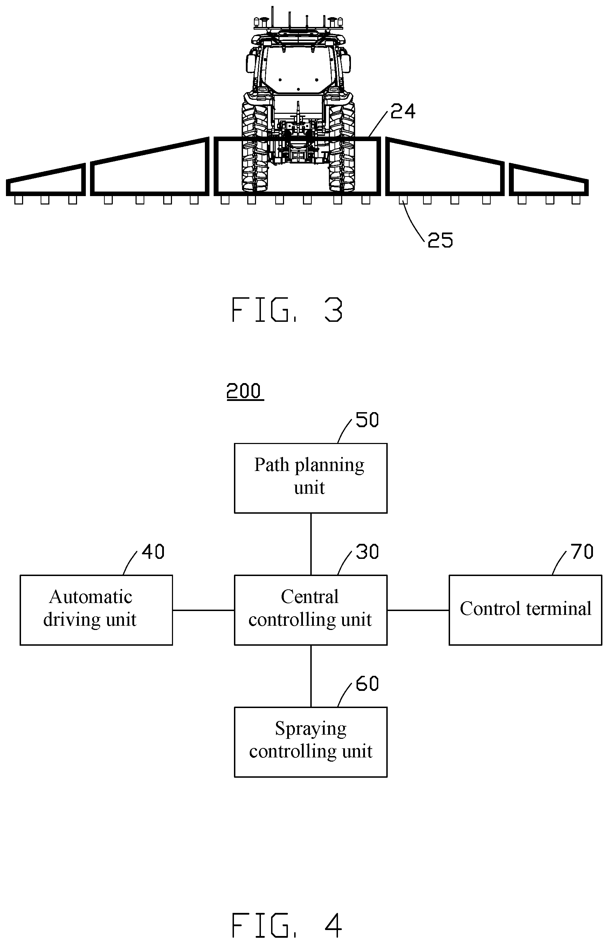

The spraying control system of the embodiment of the present application is applied in a spraying agricultural machine 100 as shown in FIGS. 2 and 3, the spraying agricultural machine 100 may be a plant protection machine, and so on. As shown in FIG. 2, the spraying agricultural machine 10 includes a driving mechanism 10 and an operation mechanism 20. The driving mechanism 10 is connected with a connection component 21 of the operation mechanism 20, the driving mechanism 10 may be a tractor, and so on. The operation mechanism 20 includes a water tank 22 and a spraying apparatus 23. The water tank 22 is configured to store solution. The spraying apparatus 23 includes a spraying bar frame 24 as shown in FIG. 3 and a plurality of sprinklers 25. The plurality of sprinklers 25 are disposed on an end of the spraying bar frame 24 facing to a field. The spraying bar frame 24 is suspended and connected to the water tank 22, and further communicated with the water tank 22, for allowing the sprinkler 25 to spray the solution in the water tank 22. While the sprinkler 25 sprays the solution, the spraying bar frame 24 deploys to an outer side in relative to the water tank 22. While the sprinkler 25 stops spraying the solution, the spraying bar frame 24 may furl to the water tank 22. The solution may be medicinal liquid for removing weed, or may be medicinal liquid for treating crop disease.

Referring to FIG. 4, the spraying control system 200 includes a central control unit 30, an automatic driving unit 40, a path planning unit 50, and a spraying controlling unit 60.

The central control unit 30 is configured to execute an interaction communicate with other control units, and generates controlling instructions in response to the interaction information, for making the other control units to execute the controlling instructions. For example, the central control unit 30 executes the interaction communicate with the path planning unit 50, the automatic driving unit 40, and the spraying controlling unit 60, and generates a path planning instruction, an automatic driving instruction, and a spraying controlling instruction in response to the interaction information. The central control unit 30 maybe, a micro controller unit (MPU) or a central process unit (CPU), but not being limited to herein.

After receiving the automatic driving instruction sent by the central control unit 30, the automatic driving unit 40 detects automatic driving information of the spraying agricultural machine and controls the driving mechanism to automatically drive based on the automatic driving information. After receiving the path planning instruction sent by the central control unit 30, the path planning unit 50 generates an operation region based on the automatic driving information. After receiving the spraying controlling instruction, the spraying controlling unit 60 controls the plurality of sprinklers to spray the solution with a predefined spraying amount to a target object, based on the operation region and the automatic driving information. The target object may be weeds or crops.

Therefore, the spraying controlling unit 60 controls the sprinklers to spray the solution with the predefined spraying amount on the target objects based on the operation region generated by the automatic driving unit 40 and the automatic driving information detected by the automatic driving unit 40, and considers factors affected with the spraying amount, which are the operation region and the automatic driving information, therefore the controlling system may accurately control the spraying amount of the sprinkler 25.

In some embodiments, the spraying control system 200 further includes a control terminal 70, the control terminal 70 includes a display unit 71. The display unit 71 may display a human-computer interaction interface, the human-computer interaction interface is configured to generate controlling instructions in response to an input of an operator, and sends the controlling instructions to the path planning unit 50 and the spraying controlling unit 60. In one embodiment, the human-computer interaction interface of the control terminal 70 generates the path planning instruction in responses to a path planning input operation of the operator, and sends the path planning instruction to the path planning unit 50. In one embodiment, the human-computer interaction interface of the control terminal 70 generates the spraying controlling instruction in responses to a spraying parameter input operation of the operator, and sends the spraying controlling instruction to the spraying controlling unit 60.

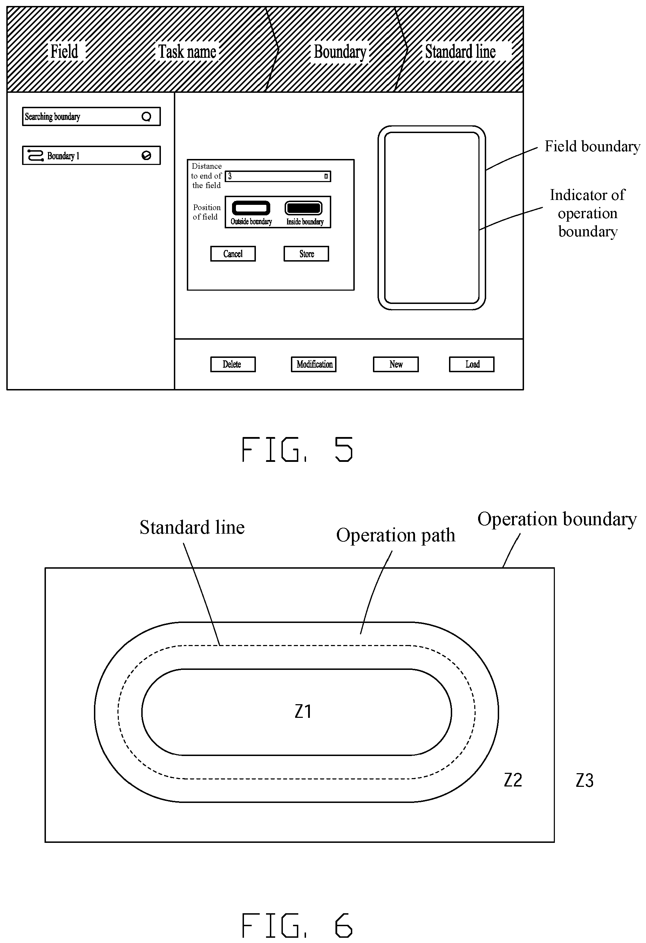

In detail, in one example, as shown in FIG. 5, the human-computer interaction interface includes a superior column. The superior column includes three sub-columns of fields and task name, boundary, and standard line. After the operator clicks the sub-column, a page of the sub-column is entered. The fields and task name are configured to set the task executed in the field, for example, the tasks include spraying of fixed points, spraying on a line path or a curved path, stop spraying on boundary, and overlapping spraying. On the page of field and task, spraying parameters corresponding to the inputted task, the control terminal 70 generates the spraying controlling instruction based on the spraying parameters. For example, a line spraying amount is inputted on the line path, a curved spraying amount is inputted on a curved path, a fixed point spraying amount is inputted on a fixed point weed, or a spraying controlling instruction is generated after a material mode being set by the overlapping spraying manner. That is, the spraying parameters includes the line spraying amount, the curved spraying amount, the fixe points spraying amount, and the material mode, and so on.

The column of boundary is configured to set operation boundary indicator. In detail, the control terminal 70 pre-stores field boundary generated in a laser positioning manner by the path planning unit 50. A corresponding parameter is inputted in a column of a distance to an end of the field, and a position is selected besides or inside the end of the field, thus the operation boundary indicator is set. For example, in the column of the distance to the end of the field, 3m is inputted, the position insides the field is selected at the end of the field, the right operation boundary indicator is set. The standard line column is configured to set a standard line of the set operation path indicator. The standard line is shown in FIG. 6. It is understood that, after the standard line is set, the control terminal 70 may generate an operation path indicator based on the standard line. The control terminal 70 may generates the path planning instructions base on the operation boundary indicators and the operation path indicator, the path planning unit 50 may generate the operation region of the operation boundary indicators and the operation path indicator based on the path planning instruction. That is, the operation region includes the operation boundary and the operation paths.

The human-computer interaction interface also includes an inputting column of distance (not shown) between the spraying bar frame 24 and the target object. After inputting a predefined distance in the inputting column, the control terminal 70 generates an elevator instruction of the spraying bar frame. The human-computer interaction interface also includes a selection button of automatic driving. After the button is pressed, the control terminal 70 generates the automatic driving instructions in response to a selected operation.

It is understood that, the central control unit 30 may be embedded in the control terminal 70, and may be divided into an independent physical unit, the central control terminal 70 as below is embedded in the control terminal 70 as an example for description.

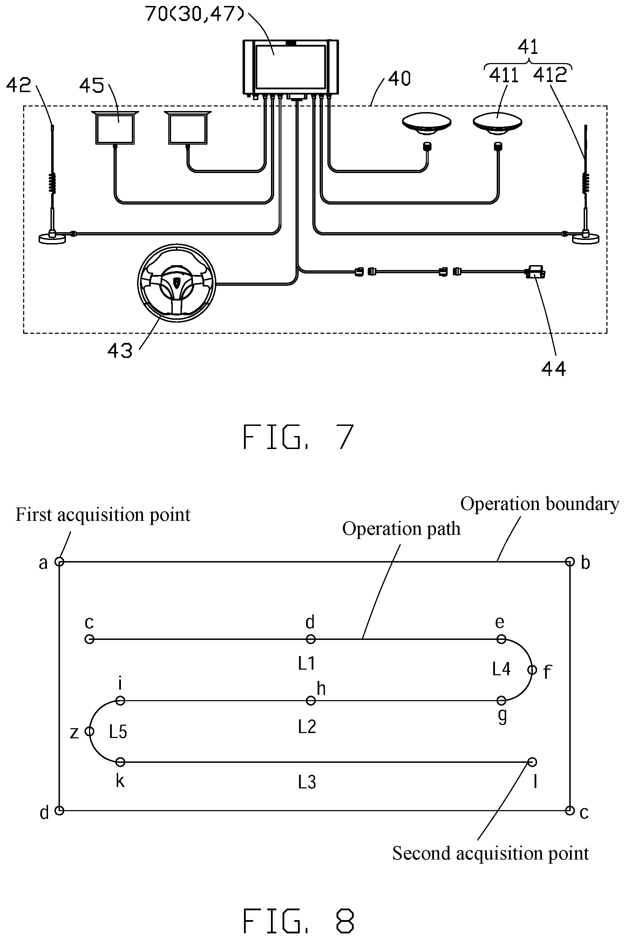

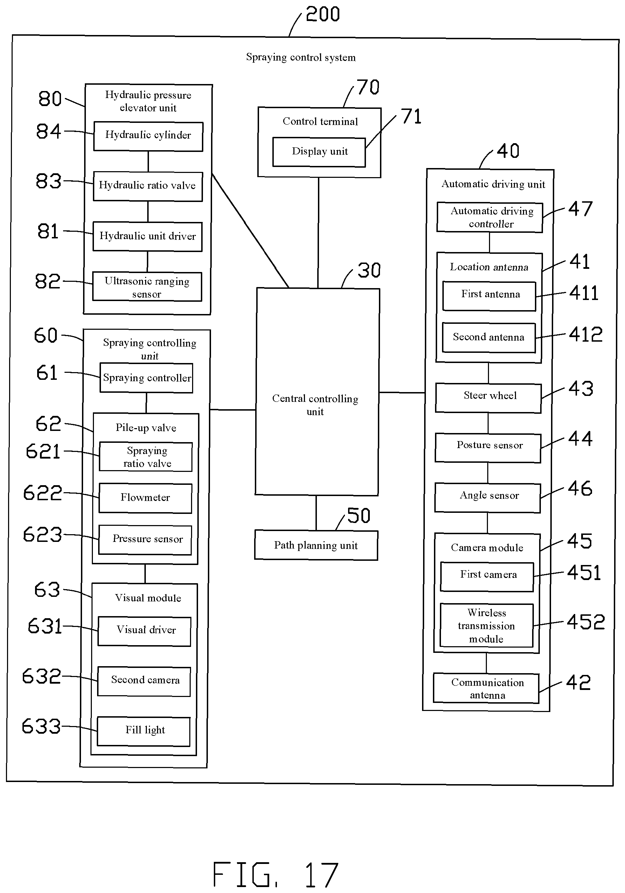

In some embodiments, referring to FIGS 7 and 17, the automatic driving unit 40 includes a location antenna 41, a communication antenna 42, a steering wheel 43, a posture sensor 44, a camera module 45, an angle sensor 46, and an automatic driving controller 47. The location antenna 41, the communication antenna 42, the steering wheel 43, the posture sensor 44, the camera module 45, and the angle sensor 46 are respectively connected with the automatic driving controller 47, and the automatic driving controller 47 is connected with the central control unit 30.

The location antenna 41 is configured to detect position information of the spraying agricultural machine 100, the position information includes longitude and latitude. The location antenna 41 may include a first antenna 411 and a second antenna 412, the first antenna 411 is configured to receive first position information of the spraying agricultural machine 100, the first antenna 41 may be a global navigation satellite system (GNSS) antenna. The second antenna 412 is configured to receive second position information of the spraying agricultural machine 100. The second antenna 412 may be a radio antenna. The first antenna 411 and the second antenna 412 respectively generate the first position information and second position information after receiving satellite signal sent by Beidou Satellite, and transmits the first position information and the second position information to the automatic driving controller 47, the automatic driving controller 47 calculates a differences of the first position information and the second position information, and then detects the position of the spraying agricultural machine 100. It is understood that, by setting the first antenna 411 and the second antenna 412 and combining with the difference calculation, the automatic driving unit of the present application may detect the position information of the spraying agricultural machine 100 more accurately. The automatic driving controller 47 may obtain an real-time speed of the spraying agricultural machine 100 based on the position information of the spraying agricultural machine 100 and a predefined algorithm. That is, the automatic driving information includes the position information of the spraying agricultural machine 100 and the real-time speed.

The communication antenna 42 is configured to establish a communication connection between the central control unit 30 and a Cellular network, the communication antenna 42 may be 4G antenna. After establishing the communication connection with the Cellular, the central control unit 30 establishes a communication with a control apparatus in a remote control room the through the Cellular network. The central control unit 30 may transmit information obtained from the other control units to the control apparatus, which is convenience to analyze the information by an operator using the control apparatus, and regulates the spraying agricultural machine 100 based on the information.

The steering wheel 43 is configured to adjust a driving direction of the driving mechanism 10, for adjusting the driving direction of the spraying agricultural machine 100. The posture sensor 44 is configured to detect posture information of the spraying agricultural machine 100, the posture sensor 44 may be set on position where the spraying agricultural machine 100 changes, the posture sensor 44 collects data of angular speed and accelerated speed on the position, calculates the posture information of the spraying agricultural machine 100. That is, the automatic driving information includes the posture information of the spraying agricultural machine 100.

The angle sensor 46 is set on wheels of the spraying agricultural machine 100, and is configured to detect rotation angle of the wheel. That is, the automatic driving information includes the rotation of the wheel of the spraying agricultural machine 100.

The camera module 45 is configured to obtain a forward image and/or a rearward image of the spraying agricultural machine 100. In some embodiments, the camera module 45 includes a first camera 451 and a wireless transmission module 452. The first camera 451 is configured to acquire the forward image and/or the rearward image of the spraying agricultural machine 100, and is a WIFI module. The wireless transmission module 452 is configured to transmit the forward image and/or the rearward image to the control apparatus in the remote control room. After receiving the forward image and/or the rearward image, the automatic driving controller 47 identifies a forward environment in front of the spraying agricultural machine 100 based on the forward image, and a rearward environment behind the spraying agricultural machine 100 based on the rearward image. The automatic driving information includes the forward environment and/or the backward environment of the spraying agricultural machine 100.

In some embodiments, the path planning unit 50 is configured to generate the operation region based on the position information of the spraying agricultural machine 100, the operation region includes an operation boundary and operation paths. In detail, referring to FIG. 8, after receiving the path planning instruction, the path planning unit 50 controls the location antenna 41 to receive the position information of the spraying agricultural machine 100 at first acquisition points, while the spraying agricultural machine 100 drives along the boundary of the field, and generates the operation boundary based on the position information of the first acquisition point. While the spraying agricultural machine 100 drives in the operation boundary, the location antenna 41 is controlled to receive a position information of second acquisition points, and the operation paths are generated based on the position information of the second acquisition point. The operation paths include a line path and a curved path. The first acquisition points includes four points a, b, c, and d, the path planning unit 50 generate the operation paths in a rectangle base on the four points. The second acquisition points includes eight points e, f, g, h, i, j, k, and l, the path planning unit 50 generates three line paths L1, L2, and L3, the curved line L4 between the line path L1 and the line path L2, the curved line L5 between the line path L2 and the line path L3. The path planning unit 50 may be a microcontroller unit (MCU) or a central process unit (CPU), but not being limited to.

In some embodiments, the automatic driving unit 40 also is configured to determine operation mode regions based on the operation region. The operation mode region includes a stopping spraying region and a non-stopping spraying region. In detail, the stopping spraying region indicates a region where the sprinklers 25 stops spraying the solution, and the non-stopping spraying region indicates a region where the sprinklers 25 sprays the solution. The central control unit 30 transmits the operation boundary and the operation paths of the path palling unit 50 to the automatic driving controller 47 of the automatic driving unit 40. Referring to FIG. 6, in some embodiments, after receiving the operation boundary and the operation paths, the automatic driving controller 47 determines regions besides the operation boundary as the stopping spraying region, and regions inside the operation boundary as the non-stopping spraying region. For example, Z3 is the stopping spraying region, and Z1, Z2 and the operation paths are the non-stopping spraying region. In some other embodiments, the automatic driving controller 47 determines regions besides the operation paths as the stopping spraying region, based on the operation paths in the operation boundary, the operation paths are the non-stopping spraying region, such as the Z1, Z2, and the operation paths are the non-stopping spraying region. In some embodiments, the automatic driving controller 47 determines regions besides the operation paths and the operation boundary, such as Z1, Z2, and Z3 are the stopping spraying region, the operation paths are the non-stopping spraying region.

In some embodiments, the automatic driving controller 47 is configured to determine travelled operation paths in the non-stopping spraying region that the spraying agricultural machine 100 has travelled, and non-travelled operation paths in the non-stopping spraying region.

In detail, while the spraying agricultural machine 100 has travelled through one of the operation paths, the automatic driving controller 47 labels the operation paths on the operation paths transmitted by the path planning unit 50 based on the position information transmitted by the location antenna 41. The paths being labeled are considered as the travelled operation path, and the paths without being labeled are considered as the non-travelled path.

The automatic driving controller 47 is also configured to determine a spraying overlapping region based on the travelled operation paths and the non-travelled operation paths, and determine a material mode based on the spraying overlapping region. That is, the operation mode further includes the spraying overlapping region.

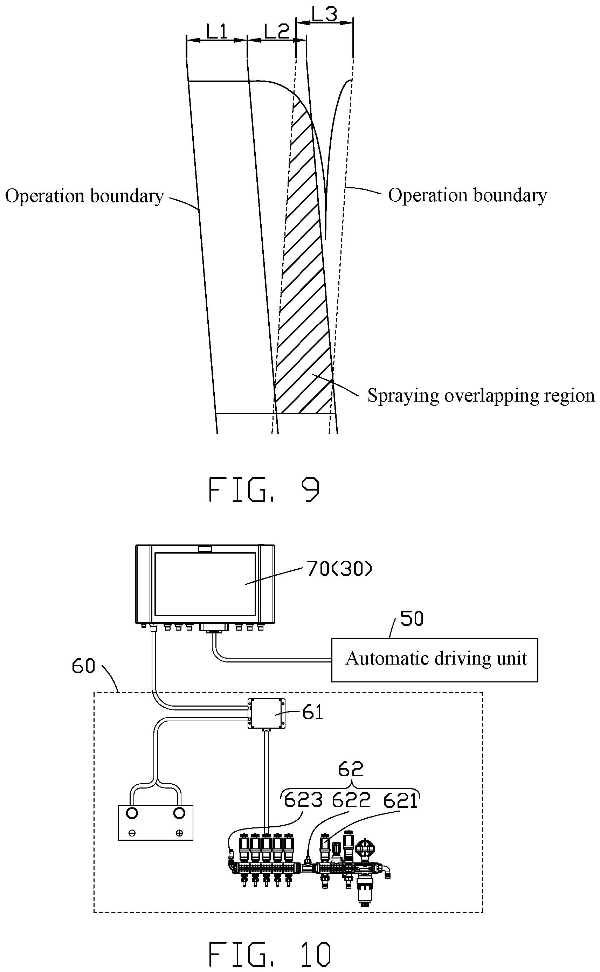

In detail, while the spraying agricultural machine 100 drives on the labeled operation path again, the automatic driving controller 47 may determine the operation paths as the spraying overlapping region. That is, the spraying overlapping region indicates a region where the spraying agricultural machine 100 drives on the travelled operation paths again. For example, referring to FIG. 9, when the operation path L2 is in an irregular shape, the spraying agricultural machine 100 drives on the operation paths L1, L2, and L3 in that order, the operation line L2 is the travelled operation path, the operation line L3 is the non-traveled operation path. The operation lines L2 and L3 are the overlapped part, that is, a shadow region is the spraying overlapping region.

The material mode indicates one mode with an overlapping rate of the fields at a specified value, which need to be sprayed again, in the spraying overlapping region. The material mode may be divided into a material saving mode, a recommendation mode, a maximum overlapping mode, and a user-defined mode. The overlapping rate in the material saving mode is 0, the overlapping rate in the recommendation mode is 75%, and the overlapping rate in the maximum overlapping mode is 100%. The user-defined mode executes one of the material saving mode, the recommendation mode, and the maximum overlapping mode according to areas of the spraying overlapping region. The material mode may be pre-stored in the automatic driving controller 47.

In one embodiment, the automatic driving controller 47 is also configured to drive the driving mechanism 10 based on the position information, the posture information, the operation paths, and the operation boundary. The steering wheel 43 adjusts a direction of the driving machine 10 based on the posture information, a rotation angle, the operation paths, and the operation boundary. It is understood that, the automatic driving controller 47 cooperates with the steering wheel 43, thus the driving mechanism 10 adjusts the operation mechanism 20 to enter or exit the operation boundary, and drives along the operation paths, for making the spraying agricultural machine 100 to automatically drive. The automatic driving controller 47 calibrates a moving posture of the spraying agricultural machine 100 based on the posture information, for ensuring an action accuracy of the spraying agricultural machine 100 in a high-speed moving job or a slope moving job. At the same time, combining with the position information transmitted by the location antenna 41, the posture information transmitted by the posture sensor 44, and the rotation angle transmitted by the angle sensor 46, a moving accuracy of the spraying agricultural machine 100 on the line paths and the curved paths is improved.

In some embodiments, referring to FIGS. 10 and 17, the spraying controlling unit 60 includes a spraying controller 61 and a pile-up valve 62 connected with the spraying controller 61. As shown in FIGS. 10 and 17, the pile-up valve 62 includes a spraying rate valve 621, a pressure sensor 623, and a flowmeter 622. The spraying rate valve 621 is configured to receive a duty cycle of the spraying controller 61, and adjusts a liquid pressure of the solution between the pile-up valve 62 and the sprinkler 25 based on the duty cycle, for making the sprinkler 25 to spray the solution with the predefined spraying amount. The flowmeter 622 is configured to detect a liquid flow in the pile-up valve 62, the pressure sensor 623 is configured to detect a liquid pressure formed by the liquid in the pile-up valve 62. The spraying controller 61 is connected with the central control unit 30, the central control unit issues the spraying instruction to the spraying controller 61, after receiving the spraying instruction, the spraying controller 61 obtains the duty cycle based on the predefined spraying amount, a liquid flow, and a liquid pressure. It is understood that, by setting the flowmeter 622 and the pressure sensor 623 of the present application, the spraying controller 61 obtains the real-time liquid pressure and the real-time liquid flow, for making an execution parameter (such as duty cycle) converted the liquid pressure and the liquid flow to satisfy with an real-time situation of the spraying agricultural machine 100, thus the liquid pressure adjusted by the spraying rate valve 621 may make the sprinkler 25 to spray reasonably.

In some embodiments, the spraying controller 61 is configured to determine a first speed of anyone of the sprinklers 25 based on the real-time speed and the sprinkler position of the sprinkler 25 while the operation paths in the non-stopping spraying region, which is determined based on the rotation angle transmitted by the angle sensor 46, is a line path, and obtain a line spraying amount of the sprinkler 25 based on the first speed and the predefined parameter.

In detail, after receiving the rotation angle transmitted by the angle sensor 46 and the operation paths transmitted by the path planning unit 50, the spraying controller 61 determines that the spraying agricultural machine 100 is on the curved path or the line path. For example, when the rotation angle is 0, a current operation path of the spraying agricultural machine 100 is the line path. When the rotation angle is not 0, the current operation path of the spraying agricultural machine 100 is the curved path.

The spraying controller 61 stores the sprinkler position of each sprinkler 25 on the spraying bar frame 24, after obtaining the real-time speed, the spraying controller 61 may convert the first speed of each sprinkler 25 based on the real-time speed and the sprinkler position of the sprinkler 25. When the operation path is the line path, the first speed of each sprinkler 25 is same. In one embodiment, the spraying controller 61 calculates a first spraying rate of each sprinkler 25 based on the first formular (1) and the real-time speed, and calculates the line spraying amount of each sprinkler 25 based on a second formular (2) and the first spraying rate (the predefined spraying amount includes the lie spraying amount).

$$V_{Liquid\ speed} = V_{Sprinkler\ 25} \times B \times 3G_{Acre}/S_{Cross-section} \times \sqrt{F_x/F_1} \times S_{Acre} \quad \text{Formular (1)}$$

$$Q_{Flow} = V_{Sprinkler\ 25} \times B \times 3B_{Acre} \times \sqrt{F_x/F_1} \times S_{Acre} \quad \text{Formular (2)}$$

Wherein, $V_{Liquid\ speed}$ represents the first spraying rate of the sprinkler 25, represents the first speed of the sprinkler 25, $B$ represents a spraying swath, represents the spraying amount of each acre; $S_{Cross-section}$ represents a cross-section of each sprinkler 25; $F_x$ represents any liquid pressure; $F_1$ represents a target liquid pressure; represents an area of each acre; $Q_{Flow}$ represents the line spraying amount of each sprinkler 25.

It is understood that, due to the $F_x$, $F_1$, $B$, $G_{Acre}$, $S_{Cross-section}$, and $S_{Acre}$ are predefined parameters, and are preset in advance. Therefore, it can be seen from the second formular, the line spraying amount $Q_{Flow}$ of the sprinkler 25 and the first speed $V_{Sprinkler\ 25}$ of the sprinkler 25 are in a directly proportional relationship. At the same time, when the operation line is a line path, the first speed of each sprinkler 25 on the spraying bar frame 24 is same. Thus, it can be seen from the first formular, the real-time speed of the spraying agricultural machine 100 converted by the first speed $V_{Sprinkler25}$ and the first spraying rate $V_{Liquid\ speed}$ are in a directly proportional relationship. While the spraying agricultural machine 100 drives on the line path, the line spraying amount of each sprinkler 25 $Q_{Flow}$ is same, and the line spraying amount of each sprinkler 25 $Q_{Flow}$ increases according to the increased real-time speed of the spraying agricultural machine 100, and decreases according to the decreased real-time speed of the spraying agricultural machine 100.

The spraying controller 61 is also configured to control all of the sprinklers 25 to spray the solution with the line spraying amount of all of the sprinklers 25 on the spraying bar frame 24. In detail, after calculating the line spraying amount, the spraying controller 61 is also configured to calculate the first duty cycle based on the line spraying amount, the liquid flow, and the liquid pressure. In one example, the spraying controller 61 calculate the first duty cycle according to the formular (3).

$$C\% = (Q_{Flow} - Q_{Current})/\left(Model\ of\ sprinkler \times \sqrt{F_Q/40P}\right) \quad \text{Formular (3)}$$

Wherein, $C\%$ represents the first duty cycle required by each sprinkler 25, $F_Q$ represents the liquid pressure measured by the pressure sensor 623, $Q_{Current}$ represents the liquid flow measured by the flowmeter 622.

After calculating the first duty cycle, the spraying controller 61 further controls the spraying rate valve 621 to adjust the liquid pressure based on the first duty cycle, for making the sprinklers 25 of the spraying bar frame 24.

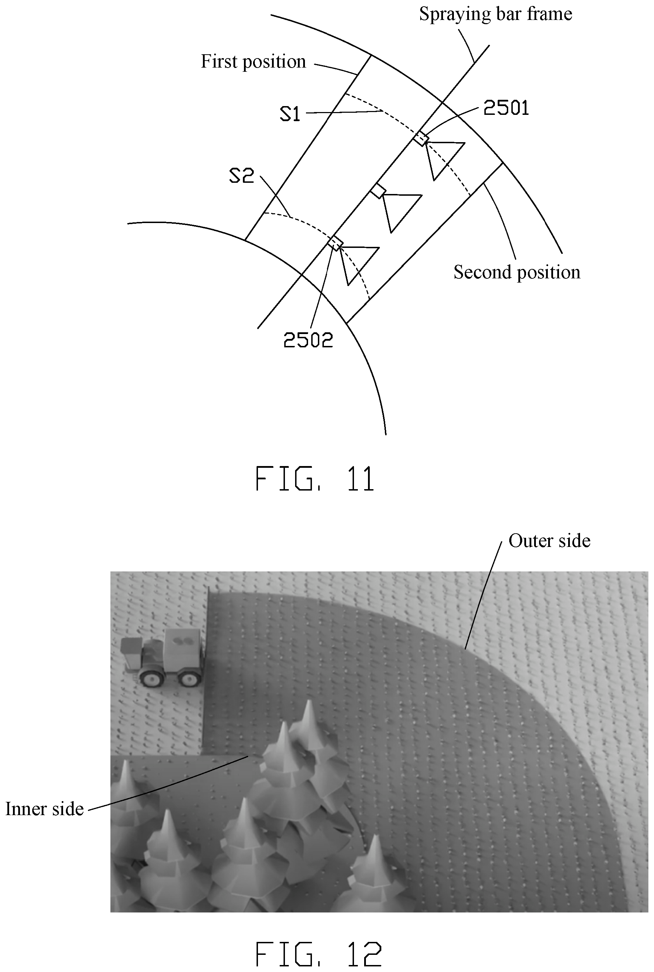

In one embodiment, the spraying controller 61 is configured to obtain a second speed corresponding to the sprinkler 25 of the spraying bar frame 24 based on the real-time speed of the spraying agricultural machine 100 and the sprinkler position of the sprinkler 25 on the spraying bar frame 24, when it is determined that the operation path in the non-stopping spraying region is the curved path based on the rotation angle. By comparing with the above embodiment, the second speeds of each of the sprinklers 25 of the spraying bar frame 24 are different from each other. As shown in FIG. 11, while the spraying agricultural machine 100 drives on the curved path, during the spraying bar frame 24 moves from a first position to a second position, a moving path of the sprinkler 2501 is S1, the moving path of the sprinkler 2502 is S2, a length of S1 is longer than a length of S2. It is understood that, within a same time duration, the length of the moving path of the sprinkler 2501 is longer than the length of the moving path of the sprinkler 2502, which means the second speed of the sprinkler 2501 is faster than the second speed of the sprinkler 2502.

The spraying controller 61 is also configured to determine a third spraying rate corresponding to each sprinkler 25 based on the second speed, and determine a curved spraying amount corresponding to each sprinkler 25 based on the third spraying rate. In one example, the spraying controller 61 calculates the curved spraying amount using the formular (1), the difference from the above embodiment is, $V_{Liquid\ speed}$ represents the third spraying rate of the sprinkler 25, $Q_{Flow}$ represents the curved spraying amount of each sprinkler 25, represents the second speed of each sprinkler 25.

It is understood that, while the operation path is the curved path, it can be seen from the first formular (1), the real-time speed of the spraying agricultural machine 100 converted by the second speed $V_{Sprinkler\ 25}$ and the second spraying rate $V_{Liquid\ speed}$ are in a directly proportional relationship, the curved spraying amount of each sprinkler 25 $Q_{Flow}$ increases according to the increased real-time speed of the spraying agricultural machine 100, and decreases according to the decreased real-time speed of the spraying agricultural machine 100. At the same time, due to the first speeds $V_{Sprinkler25}$ of each of the sprinklers 25 being different from each other, thus, it can be seen from the second formular (2), the curved spraying amounts of each of the sprinkler 25 are different from each other.

The spraying controller 61 is also configured to control each sprinkler 25 to spray the solution with the corresponding curved spraying amount. In detail, after calculating the curved spraying amount, the automatic driving controller 47 is further configured to obtain a second duty cycle based on the curved spraying amount, the liquid flow, and the liquid pressure. In one example, the spraying controller 61 calculates the second duty cycle according to the formular (3), the difference from the above the above embodiment, $C$% represents the second duty cycle required by each sprinkler 25 (that is, the duty cycle further includes the second duty cycle). After calculating the second duty cycle, the spraying controller 61 also controls the spraying rate valve 621 to adjust the liquid pressure based on the second duty cycle, for making the sprinklers 25 of the spraying bar frame 24 to spray the solution with a corresponding curved spraying amount. For example, the spray controller 61 also control the spraying rate valve 621 to adjust the liquid pressure based on the second duty cycle, for making the solution sprayed by the sprinkler 2501 to be more than the solution sprayed by the sprinkler 2502. It is understood that, on the curved path, by adjusting the liquid pressure by the spraying rate valve 621, thus the spraying rate valve 621 increases the liquid pressure from inner side to the outer side, for making the spraying amounts of the sprinklers 25 in the sprinkler component to increase from the inner side to the outer side.

In one application scene, as shown in FIG. 12, the spraying agricultural machine 100 drives on the curved path, the spraying controller 61 obtains the second speed of each sprinkler 25 based on the real-time speed of the spraying agricultural machine 100 and the sprinkler position of each sprinkler 25 on the spraying bar frame 24, determine the second spraying rate of each sprinkler 25 based on the second speed, obtain a corresponding curved spraying amount of each sprinkler 25 based on the second spraying amount, and control each sprinkler 25 to spray the solution with the corresponding spraying amount. Thus, the spraying amounts of the sprinklers 25 in the spraying bar frame 24 increase from the inner side to the outer side.

It is understood that, by comprising with the spraying agricultural machine 100 in FIG. 1, the spraying controller of the spraying agricultural machine 100 of the present application may increase the spraying amount of the sprinkler 25 being moving quickly, decrease the spraying amount of the sprinkler 25 being moving slowly, therefore the spraying agricultural machine 100 spray evenly on the curved path, that is, the received spraying amounts from the inner side to the outer side on the curved path are same.

In one embodiment, the spraying controller 61 is also configured to control the sprinkler 25 to stop spraying the solution, when the corresponding sprinkler 25 is determined to be located in the stopping spraying region based on the sprinkler position, and control the sprinkler 25 to spray the solution, when the corresponding sprinkler 25 is determined to be located in the non-stopping spraying region based on the sprinkler position.

After the automatic driving controller 47 of the automatic driving unit 40 determines the stopping spraying region and the non-stopping spraying region, the spraying controller 61 of the spraying controlling unit 60 receives the stopping spraying region and the non-stopping spraying region. At the same time, after receiving the position information transmitted by the location antenna 41, the spraying controller 61 converts the sprinkler position based on the positions of the sprinklers 25 on the spraying bar frame 24 and the position of the spraying agricultural machine 100.

In one embodiment, the spraying controller 61 is configured to control the sprinkler 25 to stop spray while the real-time speed is lower than a predefined speed and/or the sprinkler is located in the stopping spraying region. The predefined speed may be pre-set.

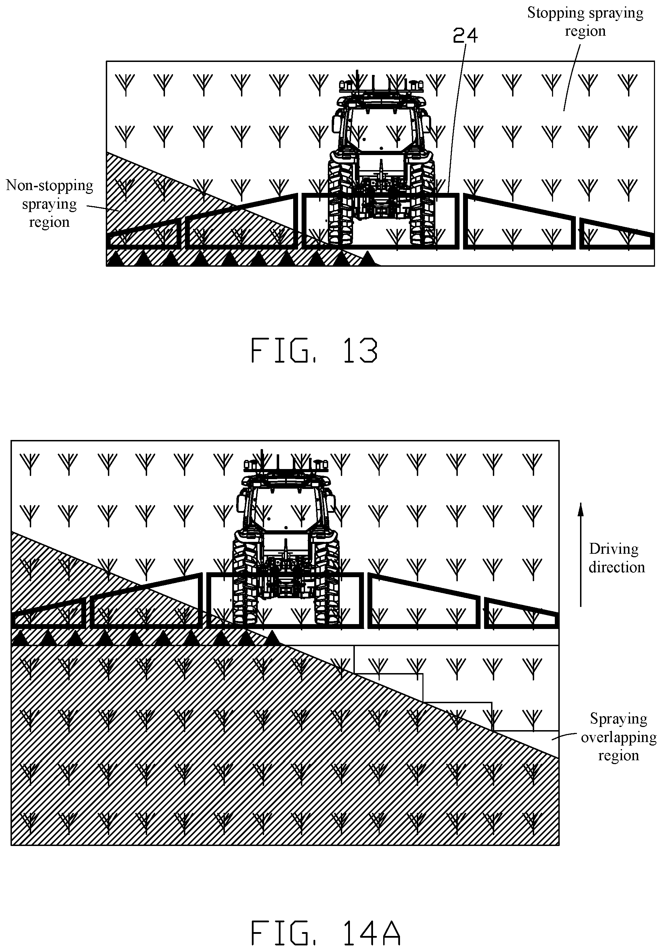

It is understood that, the spraying controller 61 may determine an executed automatic spraying mode based on the operation boundary, the operation paths, and/or the real-time speed. The spraying mode includes a stopping mode and a starting spraying mode. In detail, as shown in FIG. 13, the spraying controller 61 controls the sprinkler 25 to stop spraying in response to the position of the sprinkler 25 being in the stopping spraying region, and controls the sprinkler 25 to spray in response to the position of the sprinkler 25 being in the non-stopping spraying region. A cycle is repeated, until all fields on the operation paths are sprayed. At the same time, the sprinkler position of the sprinkler 25 is located in the non-stopping spraying region, the spraying controller 61 controls the spraying amount of the sprinkler 25 based on real-time speed and the operation paths, for making the spraying amount of the sprinkler 25 of the spraying agricultural machine 100 to be directly proportional relationship with the real-time speed of the spraying agricultural machine 100, while the spraying agricultural machine 100 drives on the line path and the curved path. Meanwhile, on the curved path from inner side to the outer side, each sprinkler 25 sprays the corresponding fixed point spraying amount, thus the spraying amount of the solution on each field of the curved path is same. When so disposed, the fields on the operation paths are automatically sprayed the predefined spraying amount, for making the fields of the operation paths to be sprayed with a same spraying amount of the solution.

In some embodiments, the spraying controller 61 is also configured to control the sprinkler 25 to stop spray after a predefined duration based on the material mode of the spraying overlapping region, while the sprinkler 25 is determined to be located in the spraying overlapping region based on the sprinkler position.

In detail, the predefined time duration may be converted by the overlapping rate, an area of the spraying overlapping region, and the predefined spraying amount, the detail calculation manner is not being limited. The predefined spraying amount selects one of the line spraying amount or the curved spraying amount based on the operation path, see above description for details. As shown in FIGS. 14A to 14C, the rectangular region is the spraying overlapping region, the shadow parts in figure are the region where the spraying agricultural machine 100 has sprayed.

In one example, as shown in FIG. 14A, the spraying controller 61 converts the predefined time duration to be 0 based on the material saving mode, and the spraying controller 61 controls the sprinkler 25 to stop spraying immediately, while the sprinkler 25 enters the spraying overlapping region based on the sprinkler position of the sprinkler 25, for making the overlapping rate to be 0%, that is, the spraying controller 61 controls the sprinkler 25 to stop spraying the solution in the spraying overlapping region.

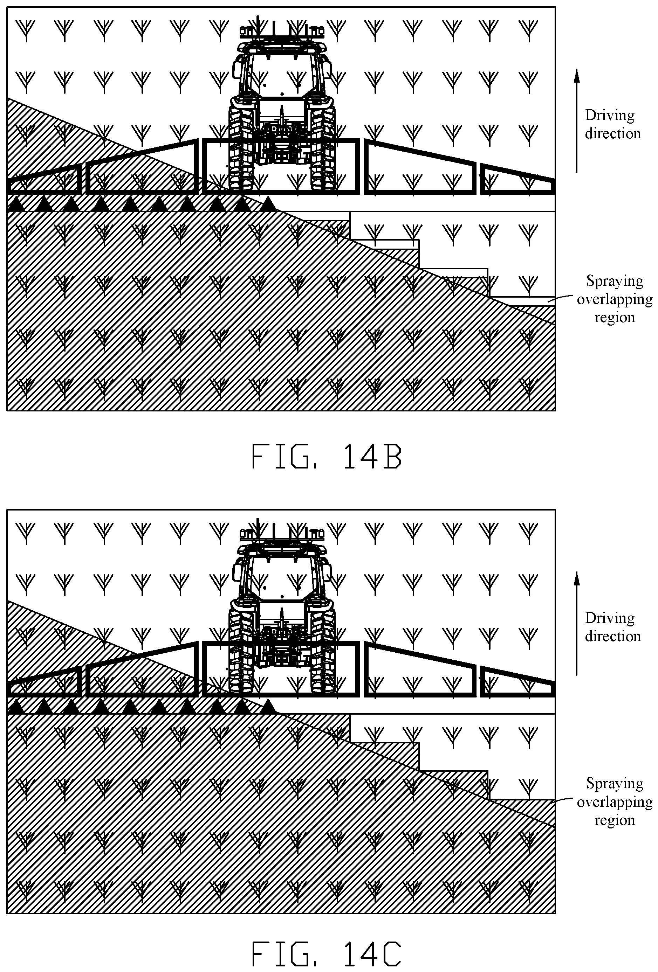

In another example, as shown in FIG. 14B, the spraying controller 61 converts the predefined time duration to be a first time duration based on the material saving mode. The spraying controller 61 controls the sprinkler 25 to stop spraying after the first time duration, while the sprinkler 25 enters the spraying overlapping region based on the sprinkler position of the sprinkler 25, for making the overlapping rate to be 75%.

In another example, as shown in FIG. 14C, the spraying controller 61 converts the predefined time duration to be a second time duration based on the saving maximum overlapping mode. The spraying controller 61 controls the sprinkler 25 to stop spraying after the second time duration, while the sprinkler 25 enters the spraying overlapping region based on the sprinkler position of the sprinkler 25, for making the overlapping rate to be 100%.

In another example, the spraying controller 61 pre-stores a user-defined mode. The spraying controller 61 determines to execute the maximum overlapping mode based on the areas of the spraying overlapping region, and then converts the predefined time duration to be a second time duration based on the saving maximum mode. The spraying controller 61 controls the sprinkler 25 to stop spraying after the first time duration, while the sprinkler 25 enters the spraying overlapping region based on the sprinkler position of the sprinkler 25, for making the overlapping rate to be 100%.

In some embodiments, as shown in FIG. 17, the spraying controlling unit 60 also includes a visual module 63 connected with the spraying controller 61. The visual module 63 includes a camera driver 631, second cameras 632 connected with the camera driver 631, and fill lights 633 connected with the camera driver 631. The fill lights 633 are configured to illustrate the non-stopping spraying region, the second cameras 632 are an artificial intelligence (AI) camera, and the second cameras 632 are configured to identify the fields, the weed, and the crops in the non-stopping spraying region. In detail, each second camera 632 pre-sets a database, the data base includes weed images and crop images, and so on. After acquiring the image of the weeds, crops, and fields, the second camera 632 establishes a prescription map without labels by classifying manner (growth and color classification) and the acquired images, and identifies the weeds or the crops in the acquired images by the shades of color (Ndvi index) and the images stored in the database. The prescription map without labels, in which the weeds and the crops are identified, is transmitted to the camera driver 631, the camera driver 631 may be a AI driver. The camera driver 631 stores a prescription information, the prescription information includes the fixed point spraying amount for eliminating the weeds (that is, the predefined spraying amount includes the fixed point spraying amount). The camera driver 631 generates a labeled prescription map based on the prescription information and the prescription map without labels. In one example, in the labeled prescription map, the plants with light color represents the crops, the fixed point spraying amount is 0, the plants with deep color represent the weeds, the fixed point spraying amount is larger than 0. Each second camera 632 may equip with one fill light 633, which increases a definition of each acquired image of the weeds and the crops.

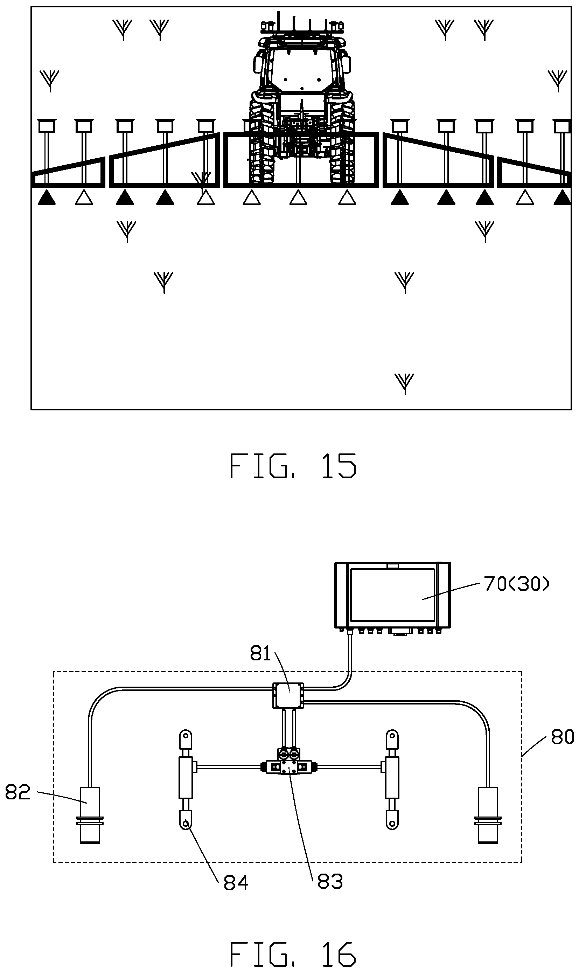

The spraying controlling instructions include a fixed point instruction. After receiving the fixed point spraying instruction issued from the central control unit 30, the spraying controller 61 determines target sprinklers and non-target sprinklers based on the labeled prescription map. The target sprinklers are the sprinklers 25 on the spraying bar frame 24 corresponding to the target objects. The spraying controller 61 generates a third duty cycle (that is the duty cycle also includes the third duty cycle) based on the fixed spraying amount represented by the labeled prescription map, the liquid pressure, and the liquid flow. In one example, the spraying controller 61 calculates the third duty cycle according to the formular (3), by comparing with calculating the first duty cycle, the difference is that, $C\%$ represents the third duty cycle required by each sprinkler 25, $Q_{Flow}$ represents the fixed point spraying amount of the labeled prescription map. In one application scene, referring to FIG. 15, the spraying controller 61 is also configured to control the target sprinkler 25 corresponding to the weeds (that is, in FIG. 15 the sprinkler 25 corresponding to the spraying solution with a black mark) to turn on, and control the spraying rate valve 621 to adjust the liquid pressure based on the third duty cycle, for making the target sprinkler 25 of the spray bar frame 24 to spray the solution with the fixed point spraying amount, at the same time, the spraying controller controls the non-target sprinkler (that is, in FIG. 15 the sprinkler 25 corresponding to the spraying solution with a non-black sprinkler 25) to stop spray.

It is understood that, the present application sets the visual module 63 in the spraying controlling unit 60, for executing a spot spray weed in the non-stopping region and executing a spot spray drug on the crop.

In some embodiments, referring to FIGS. 16 and 17, the spraying control system 200 further includes a hydraulic pressure elevator unit 80. The hydraulic pressure elevator unit 80 is configured to adjust the height of the spraying bar frame 24 based on a distance between the sprinkler 25 and the target object. In some embodiments, referring to FIG. 16, the hydraulic pressure elevator unit 80 includes a hydraulic unit driver 81, a ultrasonic ranging sensor 82 connected with the hydraulic pressure elevator unit 81, a hydraulic ratio valve 83 connected with the hydraulic pressure elevator unit 81, and a hydraulic cylinder 84 connected with the hydraulic ratio valve 83. The hydraulic cylinder 84 is connected with the spraying bar frame 24. The ultrasonic ranging sensor 82 is configured to detect a distance between the sprinkler 25 and the target object, and transmit the distance to the hydraulic unit driver 81. The hydraulic unit driver 81 is connected with the central control unit 30, the hydraulic unit driver 81 may be a driver. The hydraulic unit driver 81 is configured to receive the distance transmitted by the ultrasonic range sensor 82, and transmit the distance to the central control unit 30. The central control unit 30 issues a first elevator instruction to the hydraulic unit driver 81 based on the distance, the hydraulic unit driver 81 controls the hydraulic ratio valve 83 based on the first elevator instruction, the hydraulic ratio valve 83 allocates hydraulic oil to hydraulic cylinder based on the elevator instruction, for adjusting an expansion of the hydraulic cylinder, the hydraulic cylinder stretches to adjust the height of the spraying bar frame 24. It is understood that, by setting the ultrasonic range sensor 82, the height of the spraying bar frame 24 may be monitored in real time.

In some embodiments, the elevator instructions of the spraying bar frame include a lifting instruction and a descending instruction. The central control unit 30 compares the distance with a predefined distance, when the distance is larger than the predefined distance, the lifting instruction is generated, when the distance is less than the predefined distance, the descending instruction is generated. The predefined distance may be a best spraying distance between the spraying bar frame 24 and the crops, and may be set according to actual situation, the predefined distance may be stored in the central control unit 30, or may be obtained by in response to the input of the predefined distance by an operator on the display unit 71, in other words, a human-computer interaction interface of the control terminal 70 generates the lifting and descending instructions of the spraying bar frame 24 in responses to the lifting and descending input operation of the spraying bar frame 24 by the operator, and transmits the lifting and descending instructions of the spraying bar frame 24 to the hydraulic unit driver 81 of the hydraulic pressure elevator unit 80. The hydraulic unit driver 81 controls the hydraulic ratio valve 83 to increase a supply volume of the hydraulic oil provided to the hydraulic cylinder 84, a piston of the hydraulic cylinder 84 stretches and drives the spraying bar frame 24 to lift up. The hydraulic unit driver 81 controls the hydraulic ratio valve 83 to decrease the volume of supply of the hydraulic oil, the piston of the hydraulic cylinder 84 contracts and drives the hydraulic cylinder 84 to descend. It is understood that, when the distance is unchanged, the volume of supply of the hydraulic oil flowed from the hydraulic ratio valve 83 to the hydraulic cylinder 84, the hydraulic cylinder 84 keeps in a stretching state or in a descending state, and drives the spraying bar frame 24 to keep in a specified height. Therefore, no matter the spraying agricultural machine 100 drives on a rough field or a smooth field, the sprinkler 25 and the crop may keep in a best distance, the crop may be achieved a suitable spraying amount and a spraying force.

Using one application scene as below, the application of the spraying control system 200 on the spraying agricultural machine 100 is explained.

The control terminal 70 generates a starting information based on a starting operation, the central control unit 30 generates the path planning instruction in response to the starting information, and issues the path planning instruction to the path planning unit 50, the path planning unit 50 generates the operation boundary and the operation paths based on the position information of the spraying agricultural machine 100 transmitted by the location antenna 41. The central control unit 30 generates the automatic driving instruction, the spraying controlling instruction, the elevator instructions of the spraying bar frame. The automatic driving unit 40 controls the driving mechanism 10 to enter into the operation boundary and drives along the operation paths based on the operation paths and the operation boundary, thus the driving mechanism 10 adjusts the operation mechanism 20 to drive along the operation paths of the operation boundary.

After receiving the elevator instructions of the spraying bar frame, the hydraulic elevator unit 80 adjusts the height of the spraying bar frame 24, for making the distance between the sprinkler 25 and the crop at the predefined distance. At the same time, after the operation mechanism 20 enters into the operation boundary, the spraying controller 61 of the spraying controlling unit 60 controls the sprinkler 25 to spray the solution with the predefined spraying amount while the position of the sprinkler 25 is located in the non-stopping spraying region. In detail, while the operation path is the line path, the spraying controller 61 determines the sprinkler position of the sprinkler 25 based on the real-time speed and the position of the sprinkler 25 on the spraying bar frame 24, determines the first speed of the sprinkler 25 based on the sprinkler position, determines the line spraying amount of the sprinkler 25 based on the first speed and the predefined parameter, obtains the first duty cycle based on the line spraying amount, the liquid flow, and the liquid pressure. Then, the spraying controller 61 controls the spraying ratio valve 621 to adjust the liquid pressure from the pile-up valve 62 to the sprinkler 25 based on the first duty cycle, for making the sprinkler 25 of the spraying bar frame 24 to spray the solution with a same line spraying amount, the line spraying amount of the sprinkler 25 increases according to the increased real-time speed, and decreases according to the decreased real-time speed. After the operation mechanism 20 enters into the curved path, when the operation path is the curved path, the spraying controller 61 determines the second speed based on the real-time speed and the sprinkler position of the sprinkler 25 on the spraying bar frame 24, determines the curved spraying amount of the sprinkler 25 based on the second speed and the predefined parameter, obtains the second duty cycle based on the line spraying amount, the liquid flow, and the liquid pressure. Then, the spraying controller 61 controls the spraying ratio valve 621 to adjust the liquid pressure from the pile-up valve 62 to the sprinkler 25 based on the second duty cycle, and controls each sprinkler 25 to spraying the solution with the corresponding curved spraying amount, thus, the sprinklers 25 of the spraying bar frame increase the spraying amount from the inner side to the outer side of the curved path, and the curved spraying amount increases according to the increased real-time speed, and decreases according to the decreased real-time speed.

When the operation mechanism 20 passes the operation path being sprayed with the solution, the spraying controller 61 determines that the sprinkler 25 enters into the spraying overlapping region based on the sprinkler position of the sprinkler 25, and controls the sprinkler 25 to stop spray the solution with the line spraying amount or the curved spraying amount after the first time duration, based on the recommended mode, for making the overlapping rate of the spraying overlapping region to be 75%. After receiving the fixed point spraying instruction from the control terminal 70, the spraying controller 61 generates the third duty cycle based on the fixe point spraying amount represented by the labeled prescription map, the liquid pressure, and the solution flow, the spraying controller 61 is also configured to control the sprinkler 25 facing to the weeds to turn on based on the weed position represented by the labeled prescription map, and control the liquid pressure from the pile-up valve 62 to the sprinkler 25 based on the third duty cycle, for making the specified sprinkler 25 of the spraying bar frame 24 to spray the solution with the fixed point amount, thus the weeds in the non-stopping spraying region is removed on a spot sprayed manner.

It may be clearly understood by persons skilled in the art that, for the purpose of convenient and brief description, for a specific working process of the foregoing system, apparatus, and unit, reference may be made to a corresponding process in the foregoing method embodiments, and details are not described herein. In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

It should be noted that the content above is merely the preferable embodiments and the applied technical principle of the disclosure. It should be understood by a person skilled in the art that the disclosure is not limited to the specific embodiments, and various obvious modifications, readjustment and substitutions can be made without departing from the protection scope of the disclosure for the person skilled in the art. Therefore, although the disclosure is described in detail by embodiments above, the disclosure is not merely limited thereto, and also can include other more equivalent embodiments without departing from the concept of the disclosure. The scope of the disclosure is determined by the scope of the attached claims.

## Claims

1. A spraying control system (200), applied in a spraying agricultural machine (100), the spraying agricultural machine (100) comprises a water tank (22) and a spraying bar frame (24) communicated with the water tank (22), the spraying bar frame (24) defines a plurality of sprinkler (25), charactered in that, the spraying control system (200) comprises:

    an automatic driving unit (40), configured to detect automatic driving information of the spraying agricultural machine (100);
    a path planning unit (50), configured to generate a operation region based on the automatic driving information; and
    a spraying controlling unit (60), configured to control at least some of the sprinkler (25) on the spraying bar frame (24) to spray solution with a predefined spraying amount on a target object, based on the operation region and the automatic information.

2. The spraying control system of claim 1, wherein the automatic information comprises position information of the spraying agricultural machine (100); the automatic driving unit (40) comprises an automatic driving controller (47) and a location antenna (41);
    the automatic driving controller (47) is configured to:

    determine regions besides the operation boundary as a stopping spraying regions and regions inside the operation boundary as a non-stopping spraying regions, based on the operation boundary of the operation region; or
    determine regions besides operation paths as the stopping spraying regions and regions inside the operation paths as the non-stopping spraying region, based on the operation paths in the operation boundary;

the location antenna is configured to detect the information of the spraying agricultural machine (100);
the spraying controlling unit further comprises a spraying controller, the spraying controller is configured to:

obtain sprinkler position of each sprinkler (25) based on the position information and the position of the sprinkler (25) on the spraying bar frame (24);
it is determined that the corresponding sprinkler (25) is located in the stopping spraying region based on the sprinkler position, control the sprinkler (25) to stop spraying;
it is determined that the corresponding sprinkler (25) is located in the non-stopping spraying region based on the sprinkler position, control the sprinkler (25) to spray the solution with the predefined spraying amount.

3. The spraying control system of claim 2, wherein the automatic driving controller (47) is further configured to:

determine travelled operation paths and non-travelled operation paths in the non-stopping spraying region;
determine a spraying overlapping region based on the travelled operation paths and non-travelled operation paths;
the spraying controller (61) is further configured to :
it is determined that the corresponding sprinkler (25) is located in the spraying overlapping region based on the sprinkler position, control the sprinkler (25) to stop spraying after a predefined time duration.

4. The spraying control system of claim 2, wherein the predefined spraying amount comprises a line spraying amount; the automatic information further comprises a rotation angle of the spraying agricultural machine (100) and a real-time speed, the automatic driving unit (40) further comprises an angle sensor (46), the angle sensor (46) is configured to detect the rotation angle of the spraying agricultural machine (100) based on the position information and a predefined algorithm;
the spraying controller (61) is further configured to:

it is determined that the operation path of the non-stopping spraying region is a line path based on the rotation angle, obtain a first speed of any of the sprinklers (25) based on the real-time speed and the sprinkler position; and
obtain the line spraying amount of the sprinkler (25) based on the first speed and predefined parameter, and control the sprinkler (25) to spray the solution with the line spraying amount.

5. The spraying control system of claim 4, wherein the predefined spraying amount further comprises a curved spraying amount;
the spraying controller (61) is further configured to:

it is determined that the operation path in the non-stopping spraying region is a curved path based on the rotation angle, determine a second speed corresponding to each sprinkler (25) based on the real-time speed and the sprinkler position; and
obtain the curved spraying amount of the sprinkler (25) based on the second speed and a predefined parameter, and control the sprinkler (25) to spray the solution with the curved spraying amount.

6. The spraying control system of claim 2, wherein the predefined spraying amount comprises a fixed point spraying amount; the spraying controlling unit (60) further comprises a visual module (63); the visual module (63) is configured to identify the target objects in the non-stopping spraying region, and generate a labeled prescription map of the target objects;
the spraying controller (61) is further configured to:

determine target sprinklers and non-target sprinklers based on the labeled prescription map; wherein the target sprinklers are the sprinkler (25) on the spraying bar frame (24) facing to the target object;
obtain the fixed point spraying amount based on the labeled prescription map, control the target sprinkler to spray the solution with the fixed point spraying amount on the target object, and control the non-target sprinklers to stop spraying.

7. The spraying control system of any one of the claims 2 to 6, wherein the spraying controlling unit (60) comprises a spraying ratio valve (621), a flowmeter (622), and a pressure sensor (623); the flowmeter (622) is configured to detect a liquid flow in the spraying agricultural machine (100); the pressure sensor (623) is configured to detect the liquid pressure of the solution in the spraying agricultural machine (100);
the spraying controller (61) is further configured to:

obtain a duty cycle based on the predefined spraying amount, the liquid flow, and the liquid pressure; and control the spraying ratio valve (621) to adjust the liquid pressure, for making the sprinkler (25) to spray the solution with the predefined spraying amount.

8. The spraying control system of claim 1, wherein the spray control system (200) also comprises a hydraulic pressure elevator unit (80); the hydraulic pressure elevator unit (80) comprises an ultrasonic ranging sensor (82), a hydraulic unit driver (81), a hydraulic ratio valve (83), and a hydraulic cylinder (84);

the ultrasonic range sensor (82) is configured to detect a real-time distance between the sprinkler (25) and the target object;
the hydraulic unit driver (81) is configured to control the hydraulic ratio valve (83) to adjust a supply volume of hydraulic oil in the hydraulic cylinder (84), based on the real-time distance;
the hydraulic cylinder (84) adjusts a height of the spraying bar frame (24) based on the supply volume, for making the distance between the sprinkler (25) and the target object at a predefined distance.

9. The spraying control system of claim 1, wherein the spray control system (200) also comprises a display terminal and a central control unit (30);

the automatic driving unit (40), the path planning unit (50), and the spraying controlling unit (60) are configured to execute controlling instructions generated by the display terminal or the central control unit (30);
the display terminal is configured to generate the controlling instructions in response to an input of an operator;
the central control unit (30) is configured to generate the controlling instructions in response to interaction information with the between the automatic driving unit (40), the path planning unit (50), and the spraying controlling unit (60).

10. A spraying agricultural machine (100), charactered in that, the agricultural machine (100) comprises a water tank (22), a spraying bar frame (24), a plurality of sprinklers (25) disposed on the spraying bar frame (24), and a spraying control system (200) according to any one of claims 1 to 9.

Spraying
bar frame

Outer side

Inner side

Operation path

FIG. 1

100

10

20

22

23

21

FIG. 2

24

25

FIG. 3

200

50

Path planning
unit

40

Automatic
driving unit

30

Central
controlling unit

70

Control terminal

60

Spraying
controlling unit

FIG. 4

FIG. 5

FIG. 6

70(30,47)

42 45 40 41

411 412

43

44

FIG. 7

First acquisition point

Operation boundary

Operation path

a ○————————————————————————○ b

c ○—————————d○—————————e○

L1

L4 ○ f

i ○—————————h○—————————○

L2

g

z ○ L5

k ○—————————————————L3———————————○ l

d ○————————————————————————○ c

Second acquisition point

FIG. 8

L1   L2   L3

Operation boundary

Operation boundary

Spraying overlapping region

FIG. 9

70(30)

50

Automatic driving unit

60

61

62

623 622 621

FIG. 10

First position

Spraying bar frame

S1

2501

S2

Second position

2502

FIG. 11

Outer side

Inner side

FIG. 12

FIG. 13

FIG. 14A

Driving direction

Spraying overlapping region

FIG. 14B

Driving direction

Spraying overlapping region

FIG. 14C

FIG. 15

FIG. 16

FIG. 17

## INTERNATIONAL SEARCH REPORT

International application No.

**PCT/CN2024/105237**

### A. CLASSIFICATION OF SUBJECT MATTER

A01M7/00(2006.01)i; B05B12/00(2018.01)i

According to International Patent Classification (IPC) or to both national classification and IPC

### B. FIELDS SEARCHED

Minimum documentation searched (classification system followed by classification symbols)

IPC: A01M, B05B

Documentation searched other than minimum documentation to the extent that such documents are included in the fields searched

Electronic data base consulted during the international search (name of data base and, where practicable, search terms used)

CNTXT, ENTXTC, WPABS, VEN: 喷洒, 喷撒, 自动驾驶, 路径, 作业区域, 工作区域, 喷头, 喷嘴, 开闭, 停喷, 边界, 速度, 转弯, 拐弯, 定点, 高度, 占空比, 脉宽, 比例阀, spray, apply, dispense, nozzle, work, area, individual, control, speed, route, path, curve

### C. DOCUMENTS CONSIDERED TO BE RELEVANT

| Category* | Citation of document, with indication, where appropriate, of the relevant passages | Relevant to claim No. |
|---|---|---|
| X | US 2012215410 A1 (MCCLURE, John A. et al.) 23 August 2012 (2012-08-23) description, paragraphs 59-191, and figures 1-30 | 1-3, 8-10 |
| Y | US 2012215410 A1 (MCCLURE, John A. et al.) 23 August 2012 (2012-08-23) description, paragraphs 59-191, and figures 1-30 | 4-7 |
| Y | US 2006086295 A1 (JENSEN, Layton W.) 27 April 2006 (2006-04-27) description, paragraphs 21-30, and figures 1-6 | 4-5 |
| Y | CN 210642121 U (XAG CO., LTD.) 02 June 2020 (2020-06-02) description, paragraphs 44-84, and figures 1-12 | 6 |
| Y | US 2021219538 A1 (KROSSCHELL, J. et al.) 22 July 2021 (2021-07-22) description, paragraphs 28-205, and figures 1-16 | 7 |
| X | CN 108639350 A (SHANDONG CHUANGLI INTELLIGENT EQUIPMENT CO., LTD.) 12 October 2018 (2018-10-12) description, paragraphs 18-21, and figures 1-2 | 1, 8-10 |

☑ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 September 2024** | **25 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/105237** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 108902091 A (JILIN ACADEMY OF AGRICULTURAL MACHINERY) 30 November 2018 (2018-11-30)<br>entire document | 1-10 |
| A | CN 115023295 A (BUCHER, S. R. et al.) 06 September 2022 (2022-09-06)<br>entire document | 1-10 |

Form PCT/ISA/210 (second sheet) (July 2022)

**INTERNATIONAL SEARCH REPORT**
Information on patent family members

International application No.

**PCT/CN2024/105237**

| Patent document cited in search report | | | Publication date (day/month/year) | Patent family member(s) | | | Publication date (day/month/year) |
|---|---|---|---|---|---|---|---|
| US | 2012215410 | A1 | 23 August 2012 | US | 8634993 | B2 | 21 January 2014 |
| | | | | USRE | 47101 | E | 30 October 2018 |
| US | 2006086295 | A1 | 27 April 2006 | US | 7395769 | B2 | 08 July 2008 |
| CN | 210642121 | U | 02 June 2020 | | None | | |
| US | 2021219538 | A1 | 22 July 2021 | US | 11612160 | B2 | 28 March 2023 |
| | | | | US | 2023329220 | A1 | 19 October 2023 |
| CN | 108639350 | A | 12 October 2018 | | None | | |
| CN | 108902091 | A | 30 November 2018 | | None | | |
| CN | 115023295 | A | 06 September 2022 | EP | 4096835 | A1 | 07 December 2022 |
| | | | | EP | 4096835 | A4 | 13 March 2024 |
| | | | | AU | 2021213094 | A1 | 26 May 2022 |
| | | | | CA | 3161607 | A1 | 05 August 2021 |
| | | | | IL | 294497 | A | 01 September 2022 |
| | | | | WO | 2021154678 | A1 | 05 August 2021 |
| | | | | BR | 112022013900 | A2 | 13 September 2022 |
| | | | | US | 2020156100 | A1 | 21 May 2020 |
| | | | | IN | 202237024251 | A | 29 July 2022 |
| | | | | US | 11590522 | B2 | 28 February 2023 |

Form PCT/ISA/210 (patent family annex) (July 2022)

**REFERENCES CITED IN THE DESCRIPTION**

**Patent documents cited in the description**

- CN 202311152140